(19) **Europäisches Patentamt**
**European Patent Office**
**Office européen des brevets**

(11) **EP 4 542 985 A1**

(12) **EUROPEAN PATENT APPLICATION**

(43) Date of publication:
**23.04.2025 Bulletin 2025/17**

(21) Application number: **23204406.5**

(22) Date of filing: **18.10.2023**

(51) International Patent Classification (IPC):
***H04N 9/77*** *(2006.01)*

(52) Cooperative Patent Classification (CPC):
**H04N 9/77**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Koninklijke Philips N.V.**
**5656 AG Eindhoven (NL)**

(72) Inventor: **TICHELAAR, Johannes Yzebrand**
**5656 AG Eindhoven (NL)**

(74) Representative: **Philips Intellectual Property & Standards**
**High Tech Campus 52**
**5656 AG Eindhoven (NL)**

(54) **HDR RANGE ADAPTATION LUMINANCE AND COLOR PROCESSING**

(57) To obtain correct pixel colors, which correct chroma in addition to correct luminances for a display optimization in a system which involves change of chromaticity between a wide and narrow chromatic gamut, the inventor proposes an apparatus and method for calculating a tertiary image (Im_MDR) having a tertiary luminance dynamic range (DR_T), the apparatus comprising:

a receiver for receiving an image signal (S_inp), which comprises an input image (Im_inp) of a first, lower luminance dynamic range (DR_L), in which pixel colors are coded by an input luma (Yin_LDR) and two input chroma color components (Cb_LDR_709, Cr_LDR_709), which input chroma color components are defined based on a first set of three primary colors (Pr_N, Pg_N, Pb_N), and which image signal comprises metadata (MET) which comprises a luma mapping function (F_L_L2H) for mapping various values of various pixels of the input luma to corresponding values of a secondary luma (Yin_HDR), wherein the secondary luma is a luma of a secondary image (Im_Sec) which has a second, higher luminance dynamic range (DR_H), and which metadata comprises a saturation change function (F_S_L2H) to change the two input chroma color components (Cb_LDR_709, Cr_LDR_709) into corresponding intermediate chroma color components (Cb_HDR_709, Cr_HDR_709) defined in a color system based on the same three primary colors (Pr_N, Pg_N, Pb_N);
wherein the apparatus comprises a decoder (401) comprising a luma mapper (402) arranged to calculate the secondary luma (Yin_HDR) by applying the luma mapping function (F_L_L2H) to the input luma (Yin_LDR), and comprising a chroma modifier (403) arranged to determine the intermediate chroma color components (Cb_HDR_709, Cr_HDR_709) based on the input chroma color components (Cb_LDR_709, Cr_LDR_709) and the saturation change function (F_S_L2H);
an inverse chromatic gamut mapper (410) arranged to map, keeping a range of lumas constant between input and output, the intermediate chroma color components (Cb_HDR_709, Cr_HDR_709) to secondary chroma color components (Cb_HDR_WG, Cr_HDR_WG) which have a higher saturation and are defined based on a second set of three primary colors (Pr_W, Pg_W, Pb_W) which have a higher saturation than the first set of three primary colors (Pr_N, Pg_N, Pb_N);
characterized in that the apparatus comprises a display tuning circuit (430) which comprises:
an input for a luma mapping function (i_FT) which is received from a tuned luma mapping function derivation circuit (420), which is arranged to receive the metadata which further comprises a mastering display white point luminance (MDWPL), and receive from a storage location (421) a value of a display maximum luminance (ML_D), and apply an algorithm which determines a display-tuned luma mapping function (FL-DT) which is a similarly shaped version of the luma mapping function (F_L_L2H) which lies closer to a 45 degree diagonal (diag);
wherein the display tuning circuit (430) comprises a luma mapper (431) arranged to calculate a tertiary luma (Y_MDR) of the tertiary image, and comprises a saturation multiplier calculation circuit (432) arranged to calculate a saturation multiplier (gsat) and comprises a multiplier (435) arranged to multiply both secondary chroma color components (Cb_HDR_WG, Cr_HDR_WG) by the saturation multiplier to obtain tertiary chroma color components (Cb_MDR_WG, Cr_MDR_WG) of the tertiary image;

EP 4 542 985 A1

wherein the saturation multiplier calculation circuit (432) comprises a luma determination circuit (433) to determine a corresponding value of the input luma (Yin_LDR) corresponding to a value of the secondary luma (Yin_HDR) of a pixel being processed, and to determine the saturation multiplier (gsat) as a function of a first factor (SF1) which depends on the corresponding value of the input luma (Yin_LDR) and a second factor (SF2) which depends on the luma mapping applied to the secondary luma (Yin_HDR)

Fig. 4

**Description**

FIELD OF THE INVENTION

The invention relates to luminance-changing color processing for changing a first image (typically of a video, such as e.g. a television broadcast) of a first luminance dynamic range into a secondary image of a second dynamic range, in particular for supplying a display which has a particular maximum displayable luminance with a secondary image which looks as similar as possible to the first image.

BACKGROUND OF THE INVENTION

For more than half a century, creating, communicating and displaying videos (i.e. temporally successive sequences of images) was relatively straightforward. Developed based on the analog video signal standards (NTSC, PAL) which were specifically developed around the physical characteristics of a Cathode Ray Tube display, a digitized version was created in the standard Rec. 709. At the time this may have been called "video" but in the light of the recently progressed **High Dynamic Range (HDR) video,** the legacy video is nowadays called **Low Dynamic Range (LDR)** a.k.a. **Standard Dynamic Range (SDR).**

Basically a HDR image is an image with a larger representable (and therefore displayable) range of luminances or brightnesses (the former being mathematically unique, as it is a uniquely defined physical quantity of brightness, in units of Cd/m2 which in the technical world are called nits, e.g. the sun has a luminance of 1.5 billion nits, and a piece of paper under office lighting may have a luminance of e.g. 100 nit; the latter typically being a relative value, between 0 and 100%, where 100% may be anything, e.g. the maximum displayable luminance capability that a display showing the image happens to have). In particular, since often the minimum black luminance mB is of lesser importance, and to a good approximation largely the same in a typical e.g. home viewing environment (e.g. one may take 0.1 nit to be a good common black level), what is of importance for characterizing the HDR images, when in absolute luminance, is the **maximum luminance ML,** a.k.a. peak luminance. So whereas formally the dynamic range (in view of how human vision works) is typically represented as a ration ML/mB, e.g. 5000:0.1= 50,000:1, in practice in technical communication it may also be characterized by a maximum luminance value, e.g. of an associated target display for the created image (e.g. mastering display white point luminance MDWPL). This value, which is typically communicated in metadata as a specific characterizer of the HDR video, can be contemplated as the canvas aspect ratio of a painter: first the painter chooses an appropriate AR, e.g. 4:1 for a landscape, or 1:1 when he wants to make a still life, and then he starts optimally positioning his objects in that elected canvas. A similar thing can be done when pairing a graded video (grading means defining optimal colors and in particular their brightnesses casu quo luminances) with a MDWPL, means that one will not make brighter pixels than the e.g. 5000 nit, but one can make darker pixels. However, one may typically use this large DR to advantage by making the brightest objects, e.g. the sun in a movie, or a light bulb, equal to 5000 nit (on average for a region of pixels of the image object). The other objects, e.g. the darker objects which merely reflect the scene light, will be coordinated to be e.g. at least 40x darker in a 5000 nit MDWPL graded video, and e.g. at least 20x darker in a 2000 nit video, etc.

The difference between HDR images, as coded, i.e. typically HDR video signals, versus SDR images, can be seen both from the signal coding point of view, as from a more basic colorimetric point of view (what the viewer gets).

Legacy SDR signals would have the following properties:
The color primaries (i.e. the hue and saturation of the red, green and blue primary, the brightness of which in a mix define the created color in an additive color reproduction system, e.g. 50% red and 50% green give a yellow color) are typically EBU primaries.

The brightnesses (which in legacy SDR didn't have an associated luminance, and were percentual) are defined by luma codes, which are derived from or re-derivable to relative 0-100% to be displayed brightnesses, by a luma code allocation function, which for standardized legacy SDR video is the Rec. 709 OETF.

For our present discussion, one can state that the Rec. 709 OETF has an approximately square root shape (due to historical reasons of the electronic behavior of an electron gun of a CRT, but retained because that function also has good properties as it roughly represents lightness appearances for the human viewer, and therefore has good representation properties when having a limited amount of bits available):

$$Y\_float = sqrt\,(B\_relative).$$

If B_relative is a float number ranging from 0 to 1.0, so will Y_float. Subsequently that signal value Y_float is quantized, because we want 8 bit digital representations, ergo, the Y_dig value that is communicated to receivers over e.g. airways DVB (or internet-supplied video on demand, etc.) has a value between 0 and 255 (i.e. power(2,8)-1). If one wants to associate a nit value to the white level of SDR (Wh_SDR), 100 nit is a good typical value. For the black level, of SDR, but also several viewing scenarios of HDR, a black level (Bk_SDR) of 0.1 nit may be a good typical value.

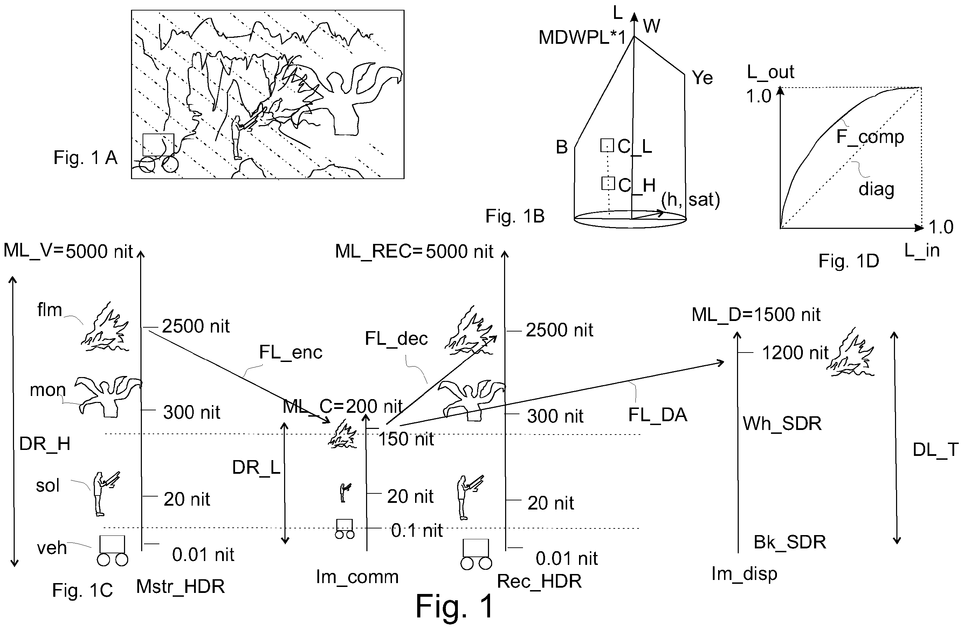

Finally, it was already shown in the old days of PAL that it is not advantageous to directly communicate the red, green and blue percentage of each pixel color. It is better to communicate a pixel color component which quantifies its brightness (i.e the luma code), and two color difference codes: Cb quantifies how bluish a color is (from Cb=Cr=0 indicating a colorless grey color), and Cr indicates the redness of a color, i.e. together with Cb a mix hue (h), and also via its magnitude a saturation (sat), i.e. e.g. soft pink versus strong red (see the color gamut of all possible definable colors of the RGB additive system in Fig. 1B, which shows a vertical cross-section plane in the blue (B)- yellow (Ye) hue axis direction with luminance as a vertical axis, and saturation sat moving outwards from the achromatic luminance axis). From the reddishness and blueishness also the green can be calculated, since we have different representation of the same 3-dimensional color. From basic colorimetry it can be shown that the [R,G,B] to display can be calculated from the [Y,Cb,Cr] by a multiplication with a fixed 3x3 color conversion matrix: [R,G,B]=M*[Y,Cb,Cr].

Together with some further formatting, e.g. relating to spatial resolution etc., this characterizes at least the colorimetry signaling of SDR video signals, e.g. for television broadcasts (which signals may then typically be compressed, e.g. via MPEG compression, but that is a further technical aspect).

So the receiving side will know it has an SDR video, if it gets this format. The maximum white (of SDR) will be by definition the brightest color that SDR can define. So if one now wants to make brighter image colors (e.g of real luminous lamps), that should be done with a different codec (also one can show the math of the Rec. 709 OETF allows only a coding of up to 1000:1 and no more).

So one defined new frameworks with different code allocation functions.

For reasons beyond what is needed for the present discussion, most HDR codecs start by defining an Electro-optical transfer function instead of its inverse, the OETF.

The property of those HDR EOTFs is that they are much steeper, to encode a much larger range of needed to be coded HDR luminances, and a significant part of that range coding specifically darker colors. At least compared to strongly non-linear HDR EOTFs, the SDR OETF is relatively close to a linear function (in fact, although we are working with a power ½ respectfully 2 at the decoding/reconstruction side, one could in principle already reasonably code SDR images with 255 linear codes), whereas HDR functions, if they were exact power functions, would have a power of 4, or even 7. When a receiver gets a video image signal defined by such an EOTF (e.g. Perceptual Quantizer) it will know it gets a HDR video. Because it must be able to decode the pixel colors to obtain the correct colors to e.g. display. The numerical values of a HDR video can in some HDR codecs also be 8 bit words. E.g. a luma of a pixel may be 128. But that 128 will mean something else in SDR (when decoded with the Rec. 709 EOTF), namely 25% of the luminance of white, than when decoded with e.g. the HDR Perceptual Quantizer (PQ) EOTF. Which one was used at the encoding side is also communicated in metadata, by giving the first possible EOTF a first code or number, e.g. " 14", the second one another number, a third possible HDR OETF, the Hybrid Loggamma (HLG) OETF a third number, etc., and so the receiving side apparatus can easily check which kind of HDR it gets as input.

We detail the typical needs of an already somewhat sophisticated HDR image handling chain with the aid of simple elucidation Fig. 1 (for a typical nice HDR scene image, the master grading of which is shown spatially in Fig. 1A, and the range of occurring pixel luminances on the left of Fig. 1C). So the basic thing one must be able to do it encode (and typically also decode and display) brighter image objects than in a typical SDR image.

Let's look at it colorimetrically now. SDR (and its coding and signaling) was designed to be able to communicate any Lambertian reflecting color (i.e. a typical object, like your blue jeans pants, which absorbs some of the infalling light, e.g. the red and green wavelengths, to emit only blue light to the viewer or capturing camera) under good uniform lighting (of the scene where the action is camera-captured). Just like we would do on a painting: if we don't add paint we get the full brightness reflecting back from the white canvas, and if we add a thick layer of strongly absorbing paint we will see a black stroke or dot. We can represent all colors brighter than blackest black and darker than white in a so-called color gamut of representable colors, as in Fig. 1B (the "tent"). As a bottom plane, we have a circle of all representable chromaticities (note that one can have long discussions that in a typical RGB system this should be a triangle, but those details are beyond the needs of the present teachings). A chromaticity is composed of a certain (rotation angle) hue h (e.g. bluish-green e.g. "teal"), and a saturation sat, which is the amount of pure color mixed in a grey, e.g. the distance from the vertical axis in the middle which represents all achromatic colors from black at the bottom becoming increasingly bright till we arrive at white. Chromatic colors, e.g. a half-saturated purple, can also have a brightness, the same color being somewhat darker or brighter. However, the brightest color in an additive system can only be (colorless) white, since it is made by setting all color channels to maximum R=G=B=255, ergo, there is no unbalance which would make the color clearly red (there is still a little bit of bluishness respectively yellowishness in the elected white point chromaticity, but that is also an unnecessary further discussion, we will assume D65 daylight white). We can define those SDR colors by setting MDWPL a (relative) 100% for white W (n.b., in SDR white does not not actually have a luminance, since legacy SDR does not have a luminance associated with the image, but we can pretend it to be X nit, e.g. typically 100 nit, which is good average representative value of the various legacy SDR tv's).

Now we want to represent brighter than Lambertian colors, e.g. the self-luminous flame object (flm) of the flame thrower of the soldier (sol) fighting the monster (mon) in this dark cave.

Let's say we define a (video maximum luminance ML_V) 5000 nit master HDR grading (master means the starting image -most important in this case best quality grading- which we will optimally grade first, to define the look of this HDR scene image, and from which we can derive secondary gradings a.k.a. graded images as needed). We will for simplicity talk about what happens to (universal) luminances, then we can for now leave the debate about the corresponding luma codes out of the discussion, and indeed PQ can code between 1/10,000 nit and 10,000 nit, so there is no problem communicating those graded pixel luminances as a e.g. 10 bit per component YCbCr pixelized HDR image, if coding according to that PQ EOTF (of course, the mappings can also be represented, and e.g. implemented in the processing IC units, as an equivalent luma mapping).

The two dotted horizontal lines represent the limitations of the SDR codable image, when associating 100 nit with the 100% of SDR white.

Although in a cave, the monster will be strongly illuminated by the light of the flames, so we will give it an (average) luminance of 300 nit (with some spread, due to the square power law of light dimming, skin texture, etc.).

The soldier may be 20 nit, since that is a nicely slightly dark value, still giving some good basic visibility.

A vehicle (veh) may be hidden in some shadowy corner, and therefore in a archetypical good impact HDR scene of a cave e.g. have a luminance of 0.01 nit. The flames one may want to make impressively bright (though not too exaggerated). On an available 5000 nit HDR range, we could elect 2500 nit, around which we could still gradually make some darker and brighter parts, but all nicely colorful (yellow and maybe some oranges).

What would now happen in a typical SDR representation, e.g. a straight from camera SDR image capturing?

The camera operator would open his iris so that the soldier comes out at "20 nit", or in fact more precisely 20%. Since the flames are much brighter (note: we didn't actually show the real world scene luminances, since master HDR video Mstr_HDR is already an optimal grading to have best impact in a typical living room viewing scenario, but also in the real world the flames would be quite brighter than the soldier, and certainly the vehicle), they would all clip to maximum white. So we would see a bright area, without any details, and also not yellow, since yellow must have a lower luminance (of course the cinematographer may optimize things so that there is still somewhat of a flame visible even in LDR, but then that is firstly never as impactful extra bright, and secondly at the detriment of the other objects which must become darker).

The same would also happen if we built a SDR (max. 100 nit) TV which would map equi-luminance, i.e. it would accurately represent all luminances of the master HDR grading it can represent, but clip all brighter object to 100 nit white.

So the usual paradigm in the LDR era was to relatively map, i.e. the brightest brightness (here luminance) of the received image to the maximum capability of the display. So as this maps 5000 nit by division by 50 on 100 nit, the flames would still be okay since the are spread as yellows and oranges around 50 nit (which is a brightness representable for a yellow, since as we see in Fig. 1B the gamut tent for yellows goes down in luminance only a little bit when going towards the most saturated yellows, in contrast to blues (B) on the other side of the slice for this hue angle B-Ye, which blues can only be made in relatively dark versions). However this would be at the detriment of everything else becoming quite dark, e.g. the soldier 20/50 nit which is pure black (and this is typically a problem that we see in SDR renderings of such kinds of movie scene).

So, if having established a good HDR maximum luminance (i.e. ML_V) for the master grading, and a good EOTF e.g. PQ for coding it, we can in principle start communicating HDR images to receivers, e.g. consumer television displays, computers, cinema projectors, etc.

But that is only the most basic system of HDR.

The problem is that, unless the receiving side has a display which can display pixels at least as bright as 5000 nit, there is still a question of how to display those pixels.

Some (DR adaptation) luminance down-mapping must be performed in the TV, to make darker pixels which are displayable. E.g. if the display has a (end-user) **display maximum luminance ML_D** of 1500 nit, one could somehow try to calculate 1200 nit yellow pixels for the flame (potentially with errors, like some discoloration, e.g. changing the oranges into yellows).

This luminance down-mapping is not really an easy task, especially to do very accurately instead of sufficiently well, and therefore various technologies have been invented (also for the not necessarily similar task of luminance up-mapping, to create an output image of larger dynamic range and in particular maximum luminance than the input image).

Typically one wants a mapping function (generically, i.e. used for simplicity of elucidation) of a convex shape in a normalized luminance (or brightness) plot, as shown in Fig. 1D. Both input and output luminances are defined here on a range normalized to a maximum equaling one, but one must mind that on the input axis this one corresponds to e.g. 5000 nit, and on the output axis e.g. 200 nit (which to and fro can be easily implemented by division respectfully multiplication). In such a normalized representation the darkest colors will typically be too dark for the grading with the lower dynamic range of the two images (here for down-conversion shown on the vertical output axis, of normalized output luminances L_out, the horizontal axis showing all possible normalized input luminances L_in). Ergo, to have a satisfactory output image corresponding to the input image, we must relatively boost those darkest luminances, e.g. by multiplying by 3x, which is the slope of this luminance compression function F_comp for its darkest end. But one cannot boost forever if one wants no colors to be clipped to maximum output, ergo, the curve must get an increasingly lower slope for brighter input luminances, e.g. it may typically map input 1.0 to output 1.0. In any case the luminance compression function F_comp for down-grading will lie above the 45 degree diagonal (diag) typically.

Care must still be taken to do this correctly. E.g., some people like to apply three such compressive functions to the three red, green and blue color channels <u>separately</u>. Whilst this is a nice and easy guarantee that all colors will fit in the output gamut (an RGB cube, which in chromaticity-luminance (L) view becomes the tent of Fig. 1B) especially with higher non-linearities it can lead to significant color errors. A e.g. reddish orange hue is determined by the percentage of red and green, e.g. 30% green and 70% red. If the 30% now gets doubled by the mapping function, but the red stays in the feeble-sloped part of the mapping function almost unchanged, we will have a 60/70, i.e. 50/50 i.e. a yellow instead of an orange. This can be particularly annoying if it depends on (in contrast to the SDR paradigm) non-uniform scene lighting, e.g. an sports car entering the shadows suddenly turning yellow.

Ergo, whilst the general desired shape for the brightening of the colors may still be the function F_comp (e.g. determined by the video creator, when grading a secondary image corresponding to his master HDR image already optimally graded), one wants a more savvy down-mapping. As shown in Fig. 1B, for many scenarios one may desire a re-grading which merely changes the brightness of the normalized luminance component (L), but now the innate type of color, i.e. its chromaticity (hue and saturation). If both SDR and HDR are represented with the same red, green and blue color primaries, they will have a similarly shaped gamut tent, only one being higher than the other in absolute luminance representation. If one scales both gamuts with their respective MDWPL values (e.g. MDWPL1= 100 nit, and MDWPL2= 5000 nit), both gamuts will exactly overlap. The desired mapping from a HDR color C_H to a corresponding output SDR color C_L (or vice versa) will simply be a vertical shifting, whilst the projection to the chromaticity plane circle stays the same.

Although the details of such approaches are also beyond the need of the present application, we have thought examples of such color mapping mechanism before, where the three color components are processed coordinatedly, although in a separate luminance and chroma processing path, e.g. in WO2017157977.

If it is now possible to down-grade with one (or more) luminance mapping functions (the shape of which may be optimized by the creator of the video(s)), in case one uses invertible functions one can design a more advanced HDR codec.

Instead of just making some <u>final</u> secondary grading from the master image, e.g. in a television, one can make a lower dynamic range image version <u>for communication,</u> **communication image Im_comm.** We have elected in the example this image to be defined with its communication image maximum luminance ML_C equal to 200 nit. The original 5000 nit image can then be reconstructed (a.k.a. decoded) as a reconstructed image Rec_HDR (i.e. with the same reconstructed image maximum luminance ML_REC) by receivers, if they receive in metadata the decoding luminance mapping function FL_dec, which is typically substantially the inverse of the coding luminance mapping function FL_enc, which was used by the encoder to map all pixel luminances of the master HDR image into corresponding lower pixel luminances of the communication image Im_comm. So the proxy image for communicating actually an image a higher dynamic range (DR_H, e.g. spanning from 0.001 nit to 5000 nit) is an image of a different, lower dynamic range (DR_L).

Interestingly, one can even elect the communication image to <u>be a 100 nit LDR (i.e. SDR) image,</u> which is immediately ready (without further color processing) to be displayed on legacy LDR images (which is a great advantage, because legacy displays don't have HDR knowledge on board). How does that work? The legacy TV doesn't recognize the MDWPL metadatum (cos that didn't exist in the SDR video standard, so the TV is also not arranged to go look for it somewhere in the signal, e.g. in a Supplemental Enhancement Information message, which is MPEG's mechanism to introduce all kinds of pre-agreed new technical information). It is also not going to look for the function. It just looks at the YCbCr e.g. 1920x1080 pixel color array, and displays those colors as usual, i.e. according to the SDR Rec. 709 interpretation. And the creator has chosen in this particular codec embodiment his FL_enc function so that all colors, even the flame, map to reasonable colors on the limited SDR range. Note that, in contrast to a simple multiplicative change corresponding to the opening or shutting of a camera iris in an SDR production (which typically leads to clipping to at least one of white and/or black), now a very complicated optimal function shape can be elected, as long as it is invertible (e.g. we have taught systems with first a coarse pre-grading and then a fine-grading). E.g. one can move the luminance (respectively relative brightness) of the car to a level which is just barely visible in SDR, e.g. 1% deep black, whilst moving the flame to e.g. 90% (as long as everything stays invertible). That may seem extremely daunting if not impossible at first sight, but many field tests with all kinds of video material and usage scenarios have shown that it is possible in practice, as long as one does it correctly (following e.g. the principles of WO2017157977).

How do we now know that this is actually a HDR video signal, even if it contains an LDR-usable pixel color image, or in fact that any HDR-capable receiver can reconstruct it to HDR: because there are also the functions FL_dec in metadata, typically one per image. And hence that signal codes what is also colorimetrically, i.e. according to our above discussion and definition, a (5000 nit) HDR image.

Although already more complex than the basic system which communicates only a PQ-HDR image, this per SDR proxy coding is still not the best future-proof system, as it still leaves the receiving side to guess how to down-map the colors if it has e.g. a 1500 nit, or even a 550 nit, tv.

Therefore we added a further technical insight, and developed so-called display tuning technology (a.k.a. display adaptation): the image can be tuned for any possible connected tv, i.e. any ML_D, because one can double the function of the coding function FL_enc as some guidance function for the up-mapping from 100 nit Im_comm not to a 5000 nit reconstructed image, but to e.g. a 1500 nit image. The concave function, which is substantially the inverse of F_comp (note, for display tuning there is no requirement of exact inversion as there is for reconstruction), will now have to be scaled to be somewhat less steep (i.e. from the reference decoding function FL_dec a display adapted luminance mapping function FL_DA will be calculated), since we expand to only 1500 nit instead of 5000 nit. I.e. an image of tertiary dynamic range (DR_T) can be calculated, e.g. optimized for a particular display in that the maximum luminance of that tertiary dynamic range is typically the same as the maximum displayable luminance of a particular display.

Techniques for this are described in WO2017108906 (we can transform a function of any shape into a similarly-shaped function which lies closer to the 45 degree diagonal, by an amount which depends on the ratio between the maximum luminances of the input image and the desired output image, versus the ratio of the maximum luminances of the input image and a reference image which would here be the reconstructed image, by e.g. using that ratio to obtain closer points on for all points on the diagonal orthogonally projecting a line segment from the respective diagonal point till it meets a point on the input function, which closer points together define the tuned output function, for calculating the to be displayed image Im_disp luminances from the Im_comm luminances).

Not only did we get more kinds of displays (LCD tv, mobile phone, home cinema projector, professional movie theatre digital projector), and more video different sources and communication media (satellite, streaming over the internet, e.g. OTT, streaming over 5G), but also did we get more production manners of video.

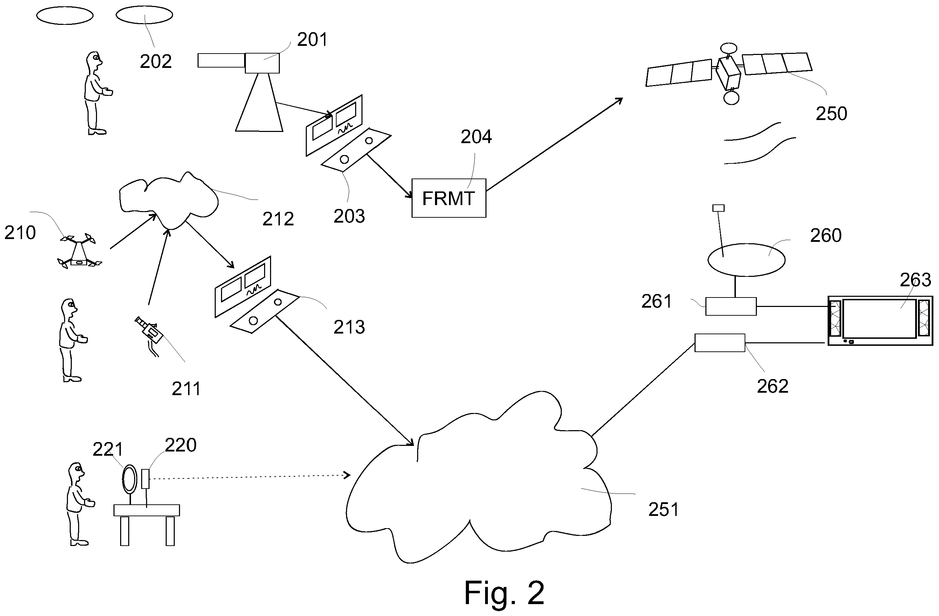

**Fig. 2** shows -in general, without desiring to be limiting- a few typical creations of video where the present teachings may be usefully deployed.

In a studio environment, e.g. for the news or a comedy, there may still be a tightly controlled shooting environment (although HDR allows relaxation of this, and shooting in real environments). There will be controlled lighting (202), e.g. a battery of base lights on the ceiling, and various spot lights. There will be a number of bulky relatively stationary television cameras (201). Variations on this often real-time broadcast will be e.g. a sports show like soccer, which will have various types of cameras like near-the-goal cameras for a local view, overview cameras, drones, etc.

There will be some production environment 203, in which the various feeds from the cameras can be selected to become the final feed, and various (typically simple, but potentially more complex) grading decisions can be taken. In the past this often happened in e.g. a production truck, which had many displays and various operators, but with internet-based workflows, where the raw feeds can travel via some network, the final composition may happen at the premises of the broadcaster. Finally, when simplifying the production for this elucidation, some coding and formatting for broadcast distribution to end (or intermediate, such as local cable stations) customers will happen in formatter 204. This will typically do the conversion to e.g. PQ YCbCr from the luminances as graded as explained with Fig. 1, for e.g. an intermediate dynamic range format, calculate and format all the needed metadata, convert to some broadcasting format like DVB or ATSC, packetize in chunks for distribution, etc. (the etc. indicating there may be tables added for signaling available content, sub-titling, encryption, but at least some of that will be of lesser interest to understand the details of the present technical innovations).

In the example the video (a television broadcast in the example) is communicated via a television satellite 250 to a satellite dish 260 and a satellite signal capable set-top-box 261. Finally it will be displayed on an end-user display 263.

This display may be showing this first video, but it may also show other video feed, potentially even at the same time, e.g. in Picture-in-Picture windows (or some data of the first HDR video program may come via some distribution mechanism and other data via another).

A second production is typically an off-line production. We can think of a Hollywood movie, but it can also be a show of somebody having a race through a jungle. Such a production may be shot with other optimal cameras, e.g. steadicam 211 and drone 210. We again assume that the camera feeds (which may be raw, or already converted to some HDR production format like HLG) are stored somewhere on network 212, for later processing. In such a production we may in the last months of production have some human color grader use grading equipment 213 to determine the optimal luminances (or relative brightnesses in case of HLG production and coding) of the master grading. Then the video may be uploaded to some internet-based video service 251. For professional video distribution this may be e.g. Netflix.

A third example is consumer video production. Here the user will have e.g. when making a vlog a ring lighter 221, and will capture via a mobile phone 220, but (s)he may also be capturing in some exterior location without supplementary lighting. She/he will typically also upload to the internet, but now maybe to youtube, or tiktok, etc.

In case of reception via the internet, the display 263 will be connected via a modem, or router 262 or the like (more complicated setups like in-house wifi and the like are not shown in this mere elucidation).

So it can be seen that today, various kinds of video, in various technical codings, can be generated and communicated in various manners, and our coding and processing systems have been designed to handle substantially all those variants.

However, being able to create any kind of HDR image, communicate it by any proxy communication image, and optimally tune it for any kind of display, based on how the content creator though the re-grading had to happen, was not enough for all of the market players.

As explained, the system would work nicely if one stayed in the same 3 primary basis, e.g. the EBU primaries used in the SDR system. But in addition to brighter colors, one also wanted more colorful (i.e. saturated) colors. Therefore one needs to define, process, etc. the colors in a wider circle of the type as shown in Fig. 1B, or in fact a different wider triangle defined by three more saturated red, green and blue primaries (e.g. lasers, or the like). It is not easy to make such displays, and despite a larger color plane Rec. 2020 was defined, not all displays are capable of displaying such highly saturated colors yet. Also, unlike brightnesses, which can of course become very bright, or very dark in a night scene, the colors of most objects in the world fall well within the smaller (EBU) triangle of SDR. E.g., if one uses an accurate spectrometer to measure the chromaticity of an orange peel, it falls slightly outside the EBU triangle, but few customers will complain if one actually displays the orange with a slightly less saturated orange (as any reader can satisfy for himself by looking at a legacy SDR image of an orange, e.g. on his laptop screen).

However, some creators wanted to at least be able to make more spectacular colors. The EBU triangle is indeed somewhat limited e.g. in the cyan region, so if one wants to show a sorcerer throwing cyan plasma flames, that may be more beautiful in Rec. 2020, or P3 RGB primaries which are also more saturated.

Still, there wouldn't much of a problem if one again processed all of the above from an input chromatic gamut being HDR-Rec.2020 to an output chromatic gamut also being defined in its ground plane by the more saturated Rec. 2020 RGB primaries, e.g. the darker SDR-Rec.2020 gamut. One could then again overlap those gamuts as shown in Fig. 1B.

However, some people want the ultimate out of the system, and they want the best possible quality for the original master HDR images (HDR-Rec.2020), yet e.g. communicated over the worst possible of the various options (e.g. SDR-EBU, and to be really challenging maybe at only 8 instead of 10 bits per channel, and a low communication bandwidth i.e. high compression, and some subsampling etc.), and then things can become quite challenging, to get all processing in good state.

In principle there are techniques which could (pre)-map in the chromatic direction (i.e. mainly saturation-reducing) from the more saturated RGB basis (e.g. SMPTE Rec. 2020) to the smaller less saturated basis (e.g. EBU, i.e. the standard RGB primaries for legacy television defined by the European Broadcasting Union).

These techniques are very different from luminance direction mappings, and challenging by themselves. They map from one SDR input chromatic gamut (i.e. RGB basis) to another <u>also SDR</u> output chromatic gamut. So we can first normalize the HDR colors, in the Rec. 2020 RGB representation, as if they were SDR colors (by the normalization technique explained with Fig. 1B), and then use a **chromatic gamut mapping** technique to make a corresponding HDR-EBU image with saturation-reduced colors in the less saturated EBU triangle, yet, still an HDR image with pixel luminances up to e.g. 5000 nit.

Because the overlap of different RGB basis gamuts in the chromatic direction is less tidy than the luminance-difference as explained with Fig. 1B, chromatic gamut mapping can comprise several sub-steps.

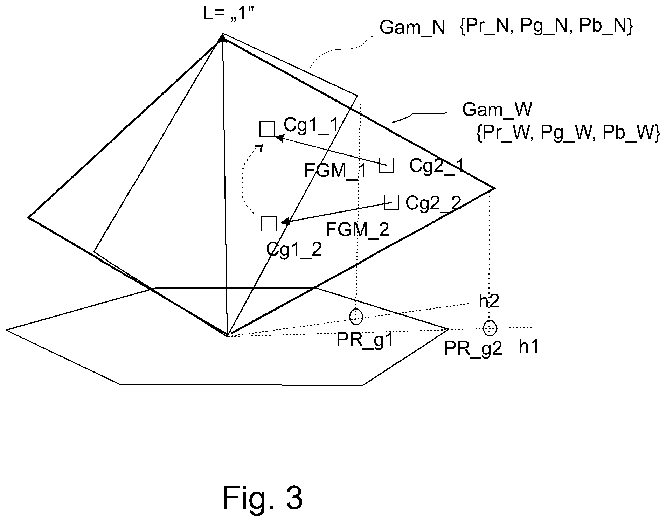

**Fig. 3** (in a luminance-chroma representation) shows some key concepts. If the triangle was merely a larger triangle, keeping the same hue angles for its primaries (or even easier, a larger circle), then chromatic gamut mapping would perhaps not be so complex. However, the triangle may not only be larger, but if its primaries are arbitrarily positioned (that is based on some external considerations of he who defined that color basis, as useful for at least one technical purpose), it may be that e.g. the red (chromaticity) of one chromatic gamut PR_g1 may be on another hue angle (h2) than the red of the other chromatic gamut PR_g2 (hue angle h1). The red chromaticity as projected in the ground plane of zero luminance corresponds to the 3D red primary, e.g. narrow red primary Pr_N of the 3 defining primaries narrow red primary Pr_N, narrow green primary Pg_N and narrow blue primary Pb_N of the narrow chromatic gamut, and similar for the 3 defining primaries wide red primary Pr_W, wide green primary Pg_W and wide blue primary Pb_W of the wide chromatic gamut. So the luminance-normalized 3-dimensional narrow chromatic gamut (Gam_N) and wide chromatic gamut (Gam_W) may have different shapes and/or orientation. One can imagine that one wants to map a color of the larger gamut to such a position inside the smaller gamut that is as close as possible, i.e. as close as possible to the maximum saturation of that gamut (whilst still maintaining some differentiability in the out-of-gamut various mapped colors). These points typically occur for some primary color. If the two reds were on the same angle, we would merely need to move inwards towards the achromatic axis, i.e. the normalized luminance axis (ending at white equaling e.g. arbitrarily 1), i.e. we would desaturate. But that creates an error. If the outer point is at some different hue angle, for the hue angle of the larger gamut outer point the narrower gamut may have already moved inwards considerably, necessitating a significant desaturation, especially if there are many out of gamut colors. So one may want to balance a smaller hue error (by moving the color to the actual, hue-shifted extremity of the narrower gamut), with some desaturation error. What is also schematically shown is that there may be some luminance changes involved in the non-linear projection (fitting) to the narrower gamut. E.g. original/input second gamut color Cg2_1 may project (as seen from first mapping arrow FGM_1) upwards to brighter luminance to corresponding output first gamut color Cg1_1, but second input second gamut color Cg2_2 may project upwards to darker luminance to corresponding second output first gamut color Cg1_2 (by second mapping arrow FGM_2, which may be the result of a number of mathematical operations, e.g. first an optimal hue shift, then a combined saturation-luminance projection, etc.).

Most chromatic gamut mapping functions are uni-directional. Errors may occur, e.g. one may map a number of highly saturated red colors in the larger gamut onto the same red output color in the narrower color.

Since we are talking about an encoding technology, i.e. the decoder should undo the dynamic range luminance mapping, but also the chromatic gamut mapping, to reconstruct the SDR-EBU communicated image pixel colors into the original high quality HDR-Rec.2020 colors, also the gamut mapping should be an invertible gamut mapping.

Such a mapping can be designed, e.g. we teach one in the ETSI TS 103433 standard.

That could work nicely if we were only reconstructing the 5000 nit original HDR from the lower dynamic range communicated image Im_comm, which may e.g. advantageously be an SDR image. At the decoder side first the luminance mapping would be undone, and then the chromatic gamut mapping.

This sounds simple, but it is not.

We still have the display tuning to the particular display maximum luminance requirement happening in the luminance mapping at the receiving apparatus, and then the chromatic and brightness mapping don't nicely decorrelate, hence cannot nicely be concatenated.

As we schematically elucidate in Fig. 3, the color for the HDR reconstruction scenario, before inverse chromatic gamut mapping, may be Cg1_2. But we explained with Fig. 1 that any luminance mapping for any dynamic range change scenario corresponds to a change in vertical position in the normalized gamut. So e.g. if Cg1_2 would be the elected particular color for a 5000 nit reconstructed image, the higher/brighter color Cg1_1 may be the color which is corresponding in a e.g. 700 nit TV display tuned image (in a normalized representation, even if one wants to render -which would not always be the case- exactly the same color, e.g. a certain pink of 100 nit, then the relative height for a gamut in which the maximum corresponds to 200 nit should be half as high as a normalized gamut where "1" means only 100 nit.

But now the (typically fixed, for the entire movie, since the RGB basis of the movie is fixed once) inverse chromatic gamut mapping doesn't know, so it will reconstruct to the color Cg2_1 rather than the correct (original master image) color Cg2_2.

Ergo, one has to seriously contemplate how to differently build the processing approach, to settle this issue (which e.g. gives in a red balloon with gradual illumination ugly harsh color banding due to the changing of the inverse chromatic gamut mapping projections).

One should also not forget that the encoding luminance mapping functions FL_enc, typically change (considerably) in shape from one image to the next (i.e. there is metadata communicating them for each image). That is because one may want to e.g. brighten an image of a dark cave (i.e. use a strongly convex function as shown in Fig. 1D), but for an image with only bright colors one may e.g. use a substantially linear shaped function. So, whereas without this (e.g. 30, 50 or 100 times per second) time variability one might still pre-optimize one big 3D LUT which is good for all, in our case, since current apparatuses don't have the computational power or other resources yet to calculate such a big LUT for each to be processed video image, we must stick to the design of having a (configurable) luminance processing pipe and a (configurable) chromaticity processing pipe a.k.a. calculation track, and then solve all still existing issues in that approach.

SUMMARY OF THE INVENTION

The problems are solved by an apparatus for calculating a tertiary image (Im_MDR) having a tertiary luminance dynamic range (DR_T), the apparatus comprising:

   a receiver for receiving an image signal (S_inp), which comprises an input image (Im_inp) of a first, lower luminance dynamic range (DR_L), in which pixel colors are coded by an input luma (Yin_LDR) and two input chroma color components (Cb_LDR_709, Cr_LDR_709), which input chroma color components are defined based on a first set of three primary colors (Pr_N, Pg_N, Pb_N), and which image signal comprises metadata (MET) which comprises a luma mapping function (F_L_L2H) for mapping various values of various pixels of the input luma to corresponding values of a secondary luma (Yin_HDR), wherein the secondary luma is a luma of a secondary image (Im_Sec) which has a second, higher luminance dynamic range (DR_H), and which metadata comprises a saturation change function (F_S_L2H) to change the two input chroma color components (Cb_LDR_709, Cr_LDR_709) into corresponding intermediate chroma color components (Cb_HDR_709, Cr_HDR_709) defined in a color system based on the same three primary colors (Pr_N, Pg_N, Pb_N);
   wherein the apparatus comprises a decoder (401) comprising a luma mapper (402) arranged to calculate the secondary luma (Yin_HDR) by applying the luma mapping function (F_L_L2H) to the input luma (Yin_LDR), and comprising a chroma modifier (403) arranged to determine the intermediate chroma color components (Cb_HDR_709, Cr_HDR_709) based on the input chroma color components (Cb_LDR_709, Cr_LDR_709) and the saturation change function (F_S_L2H);
   an inverse chromatic gamut mapper (410) arranged to map, keeping a range of lumas constant between input and output, the intermediate chroma color components (Cb_HDR_709, Cr_HDR_709) to secondary chroma color components (Cb_HDR_WG, Cr_HDR_WG) which have a higher saturation and are defined based on a second set of three primary colors (Pr_W, Pg_W, Pb_W) which have a higher saturation than the first set of three primary colors (Pr_N, Pg_N, Pb_N);

characterized in that the apparatus comprises a display tuning circuit (430) which comprises:

an input for a luma mapping function (i_FT) which is received from a tuned luma mapping function derivation circuit (420), which is arranged to receive the metadata which further comprises a mastering display white point luminance (MDWPL), and receive from a storage location (421) a value of a display maximum luminance (ML_D), and apply an algorithm which determines a display-tuned luma mapping function (FL-DT) which is a similarly shaped version of the luma mapping function (F_L_L2H) which lies closer to a 45 degree diagonal (diag);

wherein the display tuning circuit (430) comprises a luma mapper (431) arranged to calculate a tertiary luma (Y_MDR) of the tertiary image, and comprises a saturation multiplier calculation circuit (432) arranged to calculate a saturation multiplier (gsat) and comprises a multiplier (435) arranged to multiply both secondary chroma color components (Cb_HDR_WG, Cr_HDR_WG) by the saturation multiplier to obtain tertiary chroma color components (Cb_MDR_WG, Cr_MDR_WG) of the tertiary image;

wherein the saturation multiplier calculation circuit (432) comprises a luma determination circuit (433) to determine a corresponding value of the input luma (Yin_LDR) corresponding to a value of the secondary luma (Yin_HDR) of a pixel being processed, and to determine the saturation multiplier (gsat) as a function of a first factor (SF1) which depends on the corresponding value of the input luma (Yin_LDR) and a second factor (SF2) which depends on the luma mapping applied to the secondary luma (Yin_HDR).

This approach makes sure the colors of the output display adapted image are correctly in tune with the colors of the master HDR image as created by the content creator, even though communicated as both a lower dynamic range image and in a narrower chromatic gamut (i.e. defined a.k.a. spanned by more desaturated chromaticities of at least one of the additive red, green and blue primaries.

Advantageously the apparatus has the saturation multiplier calculation circuit (432) arranged to calculate as the first factor a reciprocal value (inv_gS) of a value of the output of the saturation change function (F_S L2H) for an input being the corresponding value of the input luma (Yin_LDR).

Advantageously in one embodiment of the apparatus the saturation multiplier calculation circuit (432) is arranged to yield as the first factor a display-tuned saturation multiplier (gS_DT) corresponding to the value of the display maximum luminance (ML_D) by applying an equation which raises the reciprocal value to a power C, where C is defined as 1 minus [invPQ(ML_D)-invPQ(ML_low)]/ [invPQ(MDWPL)-invPQ(ML_low)], wherein ML-low is a maximum luminance of the lower luminance dynamic range (DR_L), and invPQ is the inverse function of the SMPTE 2084 Perceptual Quantizer EOTF, for display tuning to lower dynamic range than the second luminance dynamic range (DR_H).

This is a useful approach for tuning the chromas to any image maximum luminance for any tertiary MDR image, i.e. typically optimized for a particular display having a display maximum luminance ML_D of equal nit value as that of the optimized MDR image.

Advantageously in another embodiment of the apparatus the saturation multiplier calculation circuit (432) is arranged to yield the display-tuned saturation multiplier (gS_DT) corresponding to the value of the display maximum luminance (ML_D) by applying an equation which yields the display-tuned saturation multiplier (gS_DT) equal to [invPQ(ML_D)-invPQ(ML_low)]/[ invPQ(MDWPL)-invPQ(ML_low)]+ inv_gS* [invPQ(MDWPL)-invPQ(ML_D)]/[ invPQ(MDWPL)-invPQ(ML_low)].

Advantageously some embodiments of the apparatus have the saturation multiplier calculation circuit (432) arranged to calculate the second factor as, for any value of the secondary luma (Yin_HDR), a ratio (gTM_YH) of an output of the luma mapper (431) for that value of the secondary luma (Yin_HDR) divided by that value of the secondary luma (Yin_HDR).

Advantageously some embodiments of the apparatus use as the function of the first factor (SF1) and the second factor (SF2) a simple multiplication of the first factor (SF1) by the second factor (SF2).

Advantageously a method of calculating a tertiary image (Im_MDR) having a tertiary luminance dynamic range (DR_T), comprises:

receiving an image signal (S_inp), which comprises an input image (Im_inp) of a first, lower luminance dynamic range (DR_L), in which pixel colors are coded by an input luma (Yin_LDR) and two input chroma color components (Cb_LDR_709, Cr_LDR_709), which input chroma color components are defined based on a first set of three primary colors (Pr_N, Pg_N, Pb_N), and which image signal comprises metadata (MET) which comprises a luma mapping function (F_L_L2H) for mapping various values of various pixels having the input luma to corresponding values of a secondary luma (Yin_HDR), wherein the secondary luma is a luma of a secondary image (Im_Sec) which has a second, higher luminance dynamic range (DR_H), and which metadata comprises a saturation change function (F_S L2H) to change the two input chroma color components (Cb_LDR_709, Cr_LDR_709) into corresponding intermediate chroma color components (Cb_HDR_709, Cr_HDR_709) defined in a color system based on the same three primary colors (Pr_N, Pg_N, Pb_N);

calculating the secondary luma (Yin_HDR) by applying the luma mapping function (F_L_L2H) to the input luma (Yin_LDR), and determining the intermediate chroma color components (Cb_HDR_709, Cr_HDR_709) based on the input chroma color components (Cb_LDR_709, Cr_LDR_709) and the saturation change function (F_S_L2H);

inverse chromatic gamut mapping, keeping a range of lumas constant between input and output, the intermediate chroma color components (Cb_HDR_709, Cr_HDR_709) to secondary chroma color components (Cb_HDR_WG, Cr_HDR_WG) which have a higher saturation and are defined based on a second set of three primary colors (Pr_W, Pg_W, Pb_W) which have a higher saturation than the first set of three primary colors (Pr_N, Pg_N, Pb_N);

characterized in that the method comprises a display tuning sub-process which comprises:

receiving as input a luma mapping function (i_FT), which calculated on the basis of the received metadata which further comprises a mastering display white point luminance (MDWPL), and based on a received value of a display maximum luminance (ML_D), the calculating applying an algorithm which determines a display-tuned luma mapping function (FL-DT) which is a similarly shaped version of the luma mapping function (F_L_L2H) which lies closer to a 45 degree diagonal (diag);

wherein the display tuning sub-process comprises calculating a tertiary luma (Y_MDR) of the tertiary image by luma mapping the secondary luma (Yin_HDR) using the display-tuned luma mapping function (FL-DT), and comprises calculating a saturation multiplier (gsat) multiplying both secondary chroma color components (Cb_HDR_WG, Cr_HDR_WG) by the saturation multiplier to obtain tertiary chroma color components (Cb_MDR_WG, Cr_MDR_WG) of the tertiary image;

wherein the saturation multiplier calculation comprises determining a corresponding value of the input luma (Yin_LDR) corresponding to a value of the secondary luma (Yin_HDR) of a pixel being processed, and determining the saturation multiplier (gsat) as a function of a first factor (SF1) which depends on the corresponding value of the input luma (Yin_LDR) and a second factor (SF2) which depends on the luma mapping applied to the secondary luma (Yin_HDR).

Advantageously the method has the saturation multiplier calculation arranged to calculate as the first factor a reciprocal value (inv_gS) of a value of the output of the saturation change function (F_S L2H) for an input being the corresponding value of the input luma (Yin_LDR).

Advantageously the method has the saturation multiplier calculation arranged to yield as the first factor a display-tuned saturation multiplier (gS_DT) corresponding to the value of the display maximum luminance (ML_D) by applying an equation which raises the reciprocal value to a power C, where C is defined as 1 minus [invPQ(ML_D)-invPQ(ML_low)]/[invPQ(MDWPL)-invPQ(ML_low)], wherein ML-low is a maximum luminance of the lower luminance dynamic range (DR_L), and invPQ is the inverse function of the SMPTE 2084 Perceptual Quantizer EOTF, for display tuning to lower dynamic range than the second luminance dynamic range (DR_H).

Advantageously the method has the saturation multiplier calculation arranged to yield the display-tuned saturation multiplier (gS_DT) corresponding to the value of the display maximum luminance (ML_D) by applying an equation which yields the display-tuned saturation multiplier (gS_DT) equal to [invPQ(ML_D)-invPQ(ML_low)]/[ invPQ(MDWPL)-invPQ(ML_low)]+ inv_gS*[invPQ(MDWPL)-invPQ(ML_D)]/[ invPQ(MDWPL)-invPQ(ML_low)].

Advantageously the method has the saturation multiplier calculation arranged to calculate the second factor as, for any value of the secondary luma (Yin_HDR), a ratio (gTM_YH) of a display tuned luma which results from the luma mapping for that value of the secondary luma (Yin_HDR), divided by that value of the secondary luma (Yin_HDR).

Advantageously the method uses as the function of the first factor (SF1) and the second factor (SF2) a multiplication of the first factor (SF1) by the second factor (SF2).

BRIEF DESCRIPTION OF THE DRAWINGS

These and other aspects of the method and apparatus according to the invention will be apparent from and elucidated with reference to the implementations and embodiments described hereinafter, and with reference to the accompanying drawings, which serve merely as non-limiting specific illustrations exemplifying the more general concepts, and in which dashes are used to indicate that a component is optional, non-dashed components not necessarily being essential. Dashes can also be used for indicating that elements, which are explained to be essential, but hidden in the interior of an object, or for intangible things such as e.g. selections of objects/regions.

In the drawings:

Fig. 1 schematically explains various luminance dynamic range re-gradings, i.e. mappings between input luminances (typically specified to desire by a creator, human or machine, of the video or image content) and corresponding output luminances, of a number of steps or desirable images that can occur in a HDR image handling chain;

Fig. 2 schematically introduces (non-limiting) some typical examples of use scenarios of HDR video or image communication from origin (e.g. production) to usage (typically a home consumer);

Fig. 3 schematically illustrates the concept of chromatic gamut mapping, which in 3-dimensional color space is orthogonal to luminance mapping, and a different technical process with its own constraints and technical considerations;

Fig. 4 shows a basic embodiment of a color mapping circuitry according to the present invention in some receiver of a HDR image signal (defined on the basis of a narrow gamut lower dynamic range basis image, and metadata for changing the lumas and chromas of that image);

Fig. 5 shows a universal processing block proposed by the inventor, which can be used to do the basic luma and chroma mapping involved in any re-grading of any dynamic range change to obtain a corresponding image of lower or higher dynamic range, i.e. maximum luminance, than its input image;

Fig. 6 schematically shows a preferable embodiment of the chroma processing of the chromatic gamut change-compatible display tuning following the present innovative principles;

Figs. 7 and 8 show graphs showing the result of using various display tuning algorithms on the basis function specifying the needed saturation (in fact chroma component) change for going from higher to lower luminance dynamic range (i.e. corresponding maximum luminances); and

Fig. 9 schematically shows a simple circuit realization for the circuit whose principles are elucidated in Figs. 4 and specifically 6.

## DETAILED DESCRIPTION OF THE EMBODIMENTS

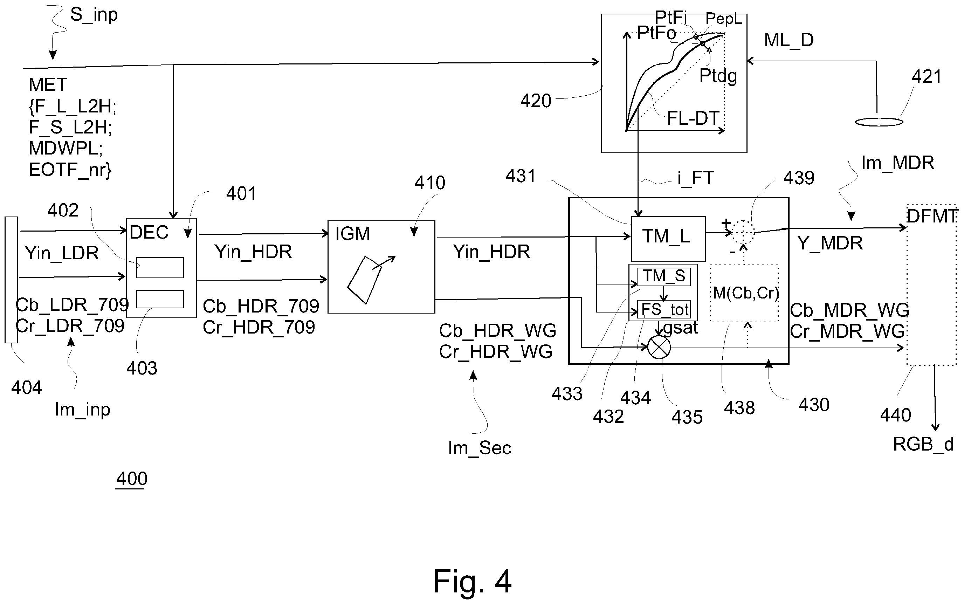

**Fig. 4** shows a basic processing circuit (400) for the calculation of a wide chromatic gamut high dynamic range display tuned tertiary image as output image starting from a communication signal based on a narrow chromatic gamut low dynamic range image (and possibly even 8 bits per color component rather than the more typical 10 or more bits per component), as it can reside e.g. in a television display, a preparation server for supplying optimized images for some particular display, a mobile phone, etc.

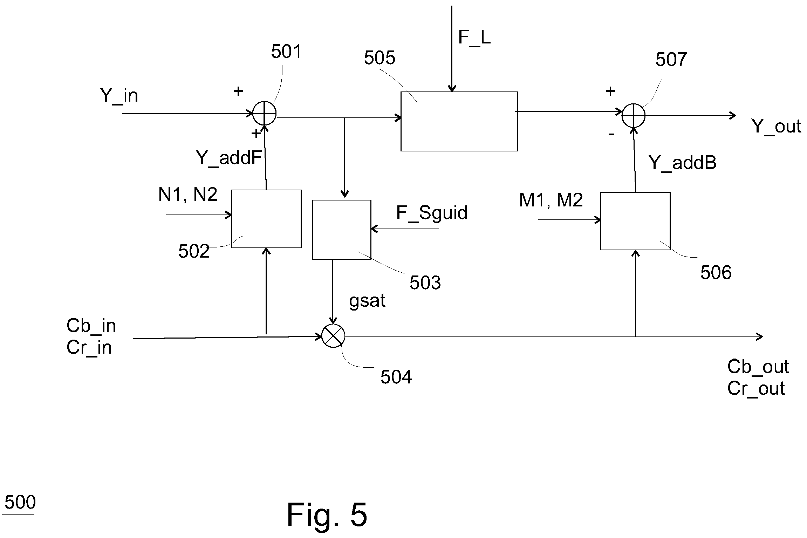

The HDR video signal decoder (401) is of a type we have elucidated before, e.g. in ETSI TS 103433. For completeness we describe another embodiment of a universal luma and chroma mapper which can be used both in encoding and decoding setting (i.e. downwards respectively upwards mapping, as the case may be) in Fig. 5, which block can be configured e.g. by connecting it when needed, activated as a software sub-program, etc.

The universal decoder (500) of **Fig. 5** receives the three color components of a pixel being processed, i.e. of a scan through an image, namely luma $Y\_in$ and chroma components $Cb\_in$ and $Cr\_in$. It has two chroma injection blocks into the luma path, front injector 502 and back injector 506, which can be configured with appropriate coefficients, front end coefficients N1 and N2 respectively back end coefficients M1 and M2, which may either be pre-fixed for some usage, or communicated from an outside source, such as the computer of the video creator, e.g. as metadata attached to a communicated video signal which also contains the YCbCr pixel colors. Typically the circuit is configured so that there is injection only at one side, i.e. the front respectively the back, by setting the other side coefficients equal to zero. For decoding the front injector is typically set to zero, and the back injector may exist, but may also not be present (i.e. also back end coefficients being set to zero).

The front injector, if activated, may add a chroma-dependent extra contribution to the luma component before it is processed, i.e. one can vary the achromatic luma by some value which depends on the Cb and Cr value of the pixel color being processed.

A typical useful equation for the front end additional component $Y\_addF$ may be:

$$Y\_addF = \max(0,\ N1*Cb + N2*Cr) \qquad\qquad [Eqs.\ 1]$$

Similarly for the back end additional component $Y\_addB$:
$Y\_addB = \max(0,\ M1*Cb + M2*Cr)$, although this value is typically subtracted from the mapped luma outputted from luma mapper 505 (via back end adder 507, the counterpart of front end adder 501).

Luma mapper 505 may be supplied with a configurable luma mapping function $F\_L$ (e.g. a function directly read from metadata, calculated internally e.g. by a display tuning algorithm, etc.). Note that a luma mapping, on achromatic colors can implement a luminance mapping, by virtue of the relationship between luminances and their luma codes as defined by an electable SDR or HDR Electro-optical Transfer Function (or its inverse an OETF). E.g. the Perceptual Quantizer HDR EOTF as standardized in SMPTE 2084 can be used, or a psychovisually uniformized partially logarithmic EOTF as defined in ETSI TS 103433.

A saturation gain factor determination circuit 503 is arranged to determine a saturation multiplier gsat for multiplying both chroma coefficients, i.e. Cb_out=gsat*Cb_in and Cr_out=gsat*Cr_in (by chroma multiplier 504). It is based on a guiding function F_Sguid, which may e.g. directly code the multiplier for each possible luma an input pixel can have, i.e. gsat[Y_in]. In case of chroma injection this would be gsat[Y_in+Y_addF].

Returning to **Fig. 4,** the luma mapper (402) of the decoder 401 will be pre-loaded with the function needed to map the input lumas Yin_LDR (e.g. 100 nit maximum-defined lumas) to the range of reconstructed master HDR lumas (i.e. Yin_HDR reaching up to e.g. 5000 nit, or 1000 nit, etc.). This function is typically directly received in the metadata (MET) part of the HDR image signal S_inp, namely luma mapping function F_L_L2H. The pixellated image itself is an array of pixel color triplets Yin_LDR, CbLDR_709 and CrLDR_709 (i.e. the narrow range chromas being defined typically as in the example of Fig. 4 though not exclusively/mandatory in the SDR Rec. 709 a.k.a. EBU gamut). The chroma modifier circuit 403 will function as explained with Fig. 5 and use as guiding function F_Sguid the saturation change function (F_S_L2H) function received in metadata, via image input 404 (which also receives the input image Im_inp, which is the communication image Im_comm). It will process the pixel color components as received in the input image, i.e. the communication image, i.e. LDR luma Yin_LDR and narrow gamut blue and red chromas Cb_LDR_709 and Cr_LDR_709, typically defined in the ITU Rec. 709 primaries. The metadata will typically also comprise a mastering display white point luminance (MDWPL) which describes the HDR characteristics of the co-communicated pixel color arrays (of which the co-coordinated lumas will normally not define a higher pixel luminance than MDWPL, and typically at least a few scenes of the video will comprise some pixels as bright as MDWPL, e.g. the bulb of a street light). In the case of LDR proxy communication this also coordinates with the F_L_L2H function. This MDWPL metadatum will typically be needed to do smart image processing related to the luminance distribution graded in the master HDR grading, e.g., in the examples below it is used for both optimally display tuning the luma mapping function and the chroma processing, for any connected or connectable display. Typically also a number indicator (EOTF_nr) of the EOTF which defines the luma code value for all pixel luminances up to MDWPL (and potentially beyond, but as said although codeable those values would typically not occur in the pixel color array), e.g. the value "16" may indicate the perceptual quantizer was used.

The resulting (intermediate) output color of the decoder 401 (Yin_HDR, CbLDR_709 and CrLDR_709), is a HDR color (i.e. normalized the various image object normalized lumas have a redistributed position, and translated via the EOTF and the MDWPL value they are the correct reconstructed output luminances of the tertiary image being a wide chromatic gamut HDR image, i.e. luminances correctly scaled along the DR_H up to e.g. 5000 nit), but, it is still in a narrow chromatic gamut (i.e. bright yet relatively less strongly saturated colors, in practice most real world colors will be representable or reasonably approximated, but not e.g. strong yellows, purples or cyans, which are typical subtractive colors).

Therefore these intermediate HDR colors are inputted to an inverse gamut mapper (410), to obtain as secondary colors the reconstructed wide chromatic gamut HDR colors of the secondary image Im_Sec (Yin_HDR, Cb_LDR_WG and Cr_LDR_WG). An example of such a wider, more saturated chromatic gamut is the Rec. 2020 chromaticity primaries color gamut, or the P3 gamut of digital cinema being another useful example. This gamut mapper typically increases the saturation of all colors in the narrower chromatic gamut so that more saturated colors in the wider chromatic gamut outside the narrower gamut are obtained (typically by e.g. a two-segment curve, in which, also inverse already at the decoder side, the low saturation colors are not changed too much in saturation, but a little bit to make some room at the extremities of the narrow gamut for mapping in ultra-saturated wide gamut colors, which undergo some saturation compression), whilst trying as much as possible to keep the hue of the pixel color before and after inverse gamut mapping the same. Ideally the luminance is also kept roughly the same, although the optimization (coding as many as possible out of gamut wider color gamut colors in the narrower gamut on the one hand, whilst keeping the color errors not too large on the other hand) may oftentimes involve a luma change also.

Several such invertible gamut mappings (i.e. the decoder moves pixel hues, saturations and lumas over exactly the same path and distance as the encoder but in the opposite direction) are possible, and it is the total framework and in particular the adjusted display tuning that is tought here, and not specific details of such a gamut mapper embodiment. Since the details of gamut mappers can be quite complex, and are not needed to understand the new technical insights of the present invention, we can refer e.g. to an exemplary invertible gamut mapper in our ETSI spec, ETSI TS 103433.

For inverse decodability, the encoder will do the two steps in the opposite order, i.e. first (forward) gamut mapping, and then the inverse of the LDR-to-HDR decoder, i.e. a HDR-to-LDR encoder. One could ask why one would not invert the order, i.e. at the decoder first do the inverse gamut mapping (IGM), and then the decoding, as that would make some aspects and in particular display tuning easier, but that may pose other issues. Now that we have a regular HDR-LDR-HDR coder/decoder in the inner loop, we cannot have issues, and predictability issues, with color changes of the IGM which may e.g. overflow, i.e. clip and violate reconstructability etc. The luma mapping part can, after forward gamut mapping, behave just as if there was only a narrow chromatic HDR signal, and nothing else. So it behaves typical, as if there was no gamut mapping need. That also would allow more liberally incorporation of various kinds of invertible gamut mapping (i.e. with different color projection rationale and corresponding math into the narrower gamut).

This would work fine with normal reconstruction, however, we have explained above that we have scenarios where the decoder does not map the luminances back to the original DL_H master grading range of the encoding side, but to some variable (not known at the encoding side) dynamic range associated with some display, i.e. lumas correctly re-distributed/re-graded to yield a corresponding ideally visually similar look on the range ending at ML_D e.g. equalling 650 nit.

As explained, that would then give problems and break the invertibility of such a display tuned mapping in the decoder with an inverse gamut mapper behind it.

So the display tuning should happen as an extra processing after the inverse gamut mapper (which it can because display tuning is not as strict as an exact reconstruction, but rather an optimization for a display), but that also requires some serious contemplation and modification.

Now that block doesn't behave exactly like the decoder anymore, e.g. it does not start its calculations from an LDR luma Yin_LDR, but rather from a HDR luma (Yin HDR), despite the functions (F_L_L2h, and in particular F_S_L2H) guiding the re-grading needs not having been specified by the content creator for that second situation, but rather the first, pure reconstruction situation.

The calculation of the display tuned luma mapping function FL_DT, which will be sent to the luma mapper 431 of the display tuning circuit 430 as a loadable luma mapping function (i_FT), may happen as follows. It may e.g. be a lookup table configuration, which can be re-set per image, because all pixels of the present image should be processed with it, but the next picture (e.g. of a totally different HDR scene luma distribution) may need a different function and LUT filling.

The display tuning algorithm will use as input any function of any shape as long as it is increasing, in fact when doubling the reversible coding function specifically strictly increasing (this will be the metadata co-communicated function F_L_L2H inverted, i.e. flipped over the diagonal). If additional functionality is included to further transform the metadata-received re-grading guidance function, i.e. the luma mapping function F_L_L2H, it may be that the display tuning circuit uses a somewhat differently shaped function than the same-shape function closer to the diagonal, e.g. has some identical output values for different input values, e.g. as in a hard clipping of the brightest input lumas.

A typical algorithm for constructing a similarly shaped display-tuned function can work as follows:
One runs through all possible input values which correspond to points on the 45 degree diagonal (e.g. specifically the point Ptdg shown as a triangle). From that point a line segment (PepL) is drawn e.g. typically orthogonal to the diagonal, until it reaches a point on the input function (the input function point PtFi shown as a diamond on the input curve being the 45 degree diagonal-mirrored version of the input function F_L_L2H). Then a distance is calculated starting from the point Ptdg based on a metric which uses as a location value which depends on a ratio of the ML_D versus the input HDR image maximum luminance, compared to a ratio of the maximum luminances of the higher and lower dynamic range reference gradings, i.e. the reconstructed HDR master respectively the input image (ImComm). Such a metric may e.g. be logarithmically, and yield some point in the middle (let's say for a particular ML_D value the position from Ptdg lies on 40% of the total distance of Ptdg to PtFi), namely output function point PtFo. All those points PtFo together, for the 40% of each distance from a diagonal point to the point on the input function, form the locus of the display tuned luma mapping function FL_DT. ML_D may be obtained from a storage memory 421, e.g. internal in a display if the whole processing chain resides in the display, or from an external display if the processing circuitry resides in an external device, such as a computer preparing the video for a display, or a set-top-box, etc.

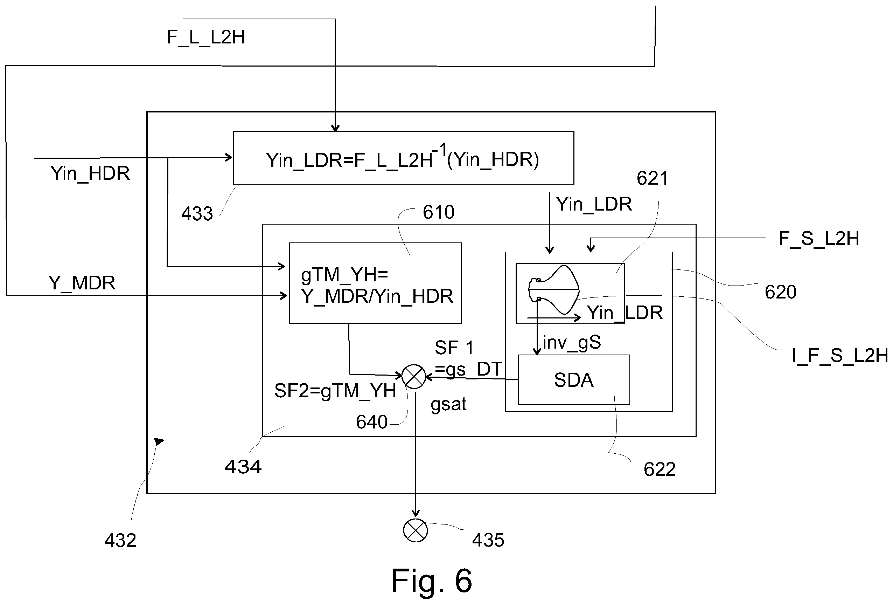

The novel display tuning circuit (430) will be further elucidated also with the aid of Fig. 6, which gives internal details of a typical advantageous embodiment.

The luma mapper (431) has already been explained, and is a typical (achromatic) luma mapper, which may be embodied as a single block with a final sole to be applied luma mapping LUT (F_L), or a cascade of successive mapping circuits.

The more challenging part is the tuning of the chromatic aspect of the pixel colors.

A saturation multiplier calculation circuit (432), which is arranged to calculate a saturation multiplier (gsat) to be used by multiplier 435 to multiply by the reconstructed HDR wide gamut chromas Cb_HDR_WG and Cr_HDR_WG to obtain the final to be output display tuned HDR wide gamut chromas Cb_MDR_WG and Cr_MDR_WG, comprises two subcircuits, namely a luma determination circuit (433), and a composite multiplier determination circuit 434.

A display tuner chroma to luma injector 438 and adder 439 may optionally be present, to subtract a display tuned amount in a manner similar as described with aid of Fig. 5.

Finally, a display formatter 440 may convert the display tuned color components of the pixels of display tuned image Im_MDR (display tuned luma Y_MDR, and chromas Cb_MDR_WG, Cr_MDR_WG) to any format preferred by a connectable or connected display, e.g. in RGB format RGB_d, in which e.g. the red, green and blue component may be Perceptual Quantizer 10 bit non-linear red, green and blue color codes.

**Fig. 6** shows that luma determination circuit (433) needs to recreate the situation of the content creation side to find a correct corresponding LDR luma (Yin_LDR) for the present HDR luma (Yin_HDR) of the pixel being processed. It can do this by calculating with the inverse function of the received luma mapping function:
Yin_LDR=inverse_F_L_L2H(Yin_HDR), with the inverse of the function in the figure being shown with the "-1" operation.

Note that there are also variants which communicate a F_L_H2L, i.e. mapping from the higher dynamic range reference image down to the lower one, and in that case this function will be used in the display tuning directly without inversion (and it will be inverted when decoding the received lower dynamic range image to a reconstructed HDR image). Other embodiments may involve as determination a pass-through of the LDR luma from earlier in the total circuitry, e.g. from the input 404, to where it is needed to be passed to a sub-circuit of composite multiplier determination circuit 434, namely reference saturation multiplier determination circuit 620. This comprises basis multiplier determination circuit 621, which inverts the saturation change function (F_S L2H) to obtain inverted saturation gain function I_F_S_L2H, and then gets a point of that function inv_gS for the value of Yin_LDR, which inv_gS forms the basis multiplier (for that pixel color of the pixel being display tuned). The inverse is inv_gS(Yin_LDR)= 1/F_S_L2H(Yin_LDR). Since this will be the same for all pixels of the same Yin_HDR value, i.e. the same corresponding Yin_LDR value, this unit may employ a pre-calculated inverse saturation function LUT, and simply establish the corresponding inv_gS output for any Yin_LDR input. Because of the relationship between Yin_LDR and Yin_HDR, which is also fixed for at least one image, one can also precalculate a LUT which has the Yin_HDR pixel lumas as input, for processing all pixels of the current image. In HDR signal communication variants where the functions in metadata define a down-mapping from the master HDR image to the lower dynamic range image which will be used as communication proxy image, no inversion of the saturation specification is needed, but it should still be adjusted to the correct display tuning situation based on the received reference saturation change function F_S_H2L.

Subsequently this basis multiplier inv_gS is display tuned by reference saturation tuning circuit 622, yielding a display tuned basis multiplier gs_DT which will function as a first factor SF1 in the calculation of the total, composite saturation multiplier gsat.

It may also use several variants of (equally working, with slight differences) tuning algorithms, e.g.:

$$gs\_DT= power\ (inv\_gS;\ PCR) \qquad [Eqs.\ 2]$$

in which

$$PCR= 1 - [invPQ(ML\_D) - invPQ(ML\_low)]/\ [invPQ(MDWPL) - invPQ(ML\_low)],$$

wherein ML-low is a maximum luminance of the lower luminance dynamic range (DR_L), i.e. of the input image Im_in, i.e. the received communication image Im_comm, and invPQ is the inverse function of the SMPTE 2084 Perceptual Quantizer EOTF.

Another possible algorithm for display tuning the saturation changing basis multiplier inv_gS is:

$$gs\_DT= [invPQ(ML\_D) - invPQ(ML\_low)]/[\ invPQ(MDWPL) - invPQ(ML\_low)]+$$
$$inv\_gS*[invPQ(MDWPL) - invPQ(ML\_D)]/[\ invPQ(MDWPL) - invPQ(ML\_low)]$$
$$[Eq.\ 3]$$

This is a simpler calculation for circuitry, or software, which yields similarly behaving sufficiently good working saturation tuning results.

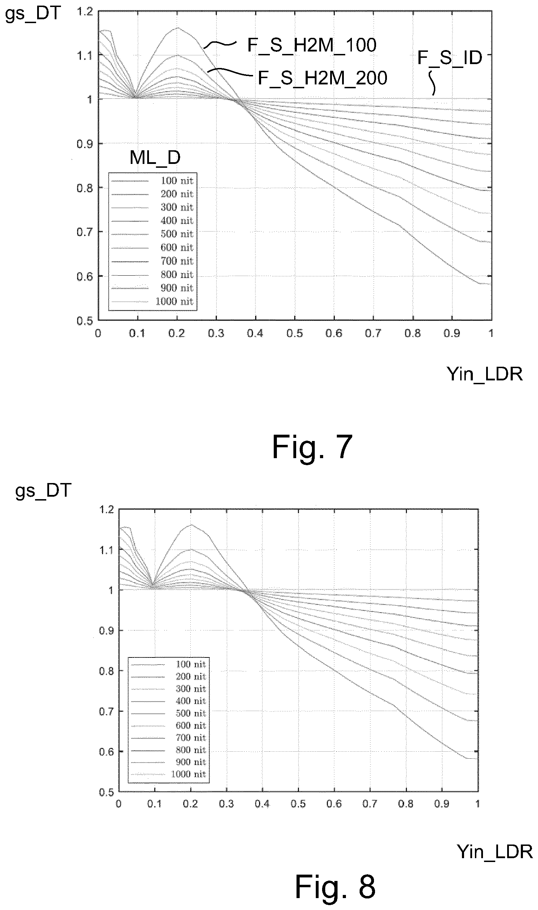

**Fig. 7** shows a set of display tuned saturation multiplier functions obtained by Eqs. 2. E.g., the largest saturation change is obtained by first function F_S_H2M_100, which may e.g. be the starting (guiding) function for re-grading the reconstructed master HDR chromas to output chromas of a 100 nit LDR image (i.e., this would correspond to the inverse of F_S_L2H). Second function F_S_H2M_200 specifies the saturation change, yielding corresponding display tuned basis multiplier gs_DT for any input pixel luma, tuned for obtaining a 200 nit maximum luminance medium dynamic range (MDR) optimized output image (i.e. Im_MDR), etc. Finally, in this example, if the master HDR image (and hence its reconstruction) have a MDWPL value of 1000 nit, when mapping to an output image optimized for a 1000 nit connected display, no saturation changes of the first factor are needed, hence the identity function F_S_ID comes out of the algorithm (i.e. with all multipliers being equal to 1).

**Fig. 8** shows the same when using Eq. 3 in the chroma display tuning algorithm, which as can be seen gives substantially the same results.

Returning to Fig. 6, luminance compensating chroma changing circuit 610 gets both the pixel's HDR luma Yin_HDR and the display tuned luma Y_MDR, i.e. the tertiary luma (which may be passed through from luma mapper 431) as input. The second factor SF2 will typically be a tone mapping dependent second luma multiplier gTM_YH which equals the ratio of Y_MDR divided by Yin_HDR. Finally the total composite chroma multiplier gsat which is to be used for obtaining the display tuned output chromas is determined by multiplier 640 to be the multiplication of the first factor SF1 by the second factor SF2.

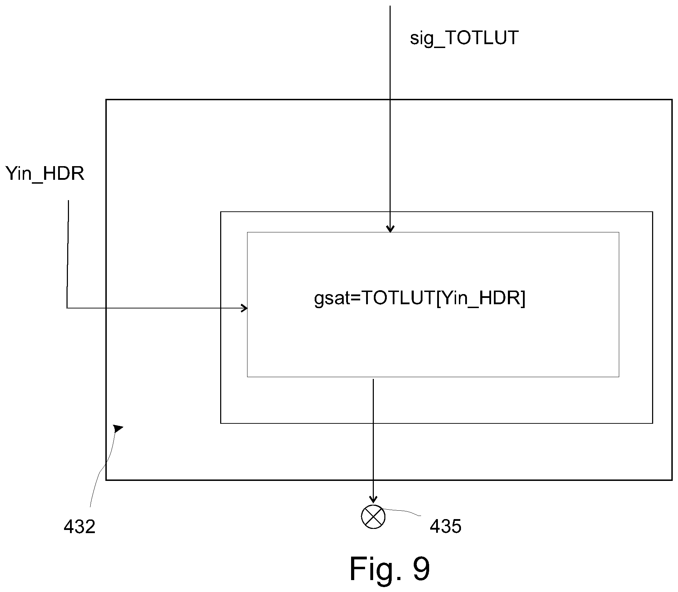

As **Fig. 9** shows, the whole chroma processing's saturation multiplier (gsat) calculation can be performed on a single pre-calculated LUT, which can get Yin_HDR as input. The circuit 432 in such an embodiment will get, before starting processing the pixels of at least one image (and potentially a set of images having the same luminance and saturation mapping functions), the correct LUT TOTLUT[] to apply signaled as sig_TOTLUT from e.g. firmware running outside the color processing core circuit.

The algorithmic components disclosed in this text may (entirely or in part) be realized in practice as hardware (e.g. parts of an application specific integrated circuit) or as software running on a special digital signal processor, or a generic processor, etc. The images may be temporarily or for long term stored in various memories, in the vicinity of the processor(s) or remotely accessible e.g. over the internet.

It should be understandable to the skilled person from our presentation which components may be optional improvements and can be realized in combination with other components, and how (optional) steps of methods correspond to respective means of apparatuses, and vice versa. Some combinations will be taught by splitting the general teachings to partial teachings regarding one or more of the parts. The word "apparatus" in this application is used in its broadest sense, namely a group of means allowing the realization of a particular objective, and can hence e.g. be (a small circuit part of) an IC, or a dedicated appliance (such as an appliance with a display), or part of a networked system, etc. "Arrangement" is also intended to be used in the broadest sense, so it may comprise inter alia a single apparatus, a part of an apparatus, a collection of (parts of) cooperating apparatuses, etc.

The computer program product denotation should be understood to encompass any physical realization of a collection of commands enabling a generic or special purpose processor, after a series of loading steps (which may include intermediate conversion steps, such as translation to an intermediate language, and a final processor language) to enter the commands into the processor, and to execute any of the characteristic functions of an invention. In particular, the computer program product may be realized as data on a carrier such as e.g. a disk or tape, data present in a memory, data travelling via a network connection -wired or wireless-. Apart from program code, characteristic data required for the program may also be embodied as a computer program product. Some of the technologies may be encompassed in signals, typically control signals for controlling one or more technical behaviors of e.g. a receiving apparatus, such as a television. Some circuits may be reconfigurable, and temporarily configured for particular processing by software.

Some of the steps required for the operation of the method may be already present in the functionality of the processor instead of described in the computer program product, such as data input and output steps.

It should be noted that the above-mentioned embodiments illustrate rather than limit the invention. Where the skilled person can easily realize a mapping of the presented examples to other regions of the claims, we have for conciseness not mentioned all these options in-depth. Apart from combinations of elements of the invention as combined in the claims, other combinations of the elements are possible. Any combination of elements can in practice be realized in a single dedicated element, or split elements.

Any reference sign between parentheses in the claim is not intended for limiting the claim. The word "comprising" does not exclude the presence of elements or aspects not listed in a claim. The word "a" or "an" preceding an element does not exclude the presence of a plurality of such elements, nor the presence of other elements.

**Claims**

1. An apparatus for calculating a tertiary image (Im_MDR) having a tertiary luminance dynamic range (DR_T), the apparatus comprising:

a receiver for receiving an image signal (S_inp), which comprises an input image (Im_inp) of a first, lower luminance dynamic range (DR_L), in which pixel colors are coded by an input luma (Yin_LDR) and two input chroma color components (Cb_LDR_709, Cr_LDR_709), which input chroma color components are defined based on a first set of three primary colors (Pr_N, Pg_N, Pb_N), and which image signal comprises metadata (MET) which comprises a luma mapping function (F_L_L2H) for mapping various values of various pixels of the input luma to corresponding values of a secondary luma (Yin_HDR), wherein the secondary luma is a luma of a secondary image (Im_Sec) which has a second, higher luminance dynamic range (DR_H), and which metadata comprises a saturation change function (F_S_L2H) to change the two input chroma color components (Cb_LDR_709, Cr_LDR_709) into corresponding intermediate chroma color components (Cb_HDR_709, Cr_HDR_709) defined in a color system based on the same three primary colors (Pr_N, Pg_N, Pb_N);
wherein the apparatus comprises a decoder (401) comprising a luma mapper (402) arranged to calculate the secondary luma (Yin_HDR) by applying the luma mapping function (F L_L2H) to the input luma (Yin_LDR), and comprising a chroma modifier (403) arranged to determine the intermediate chroma color components (Cb_HDR_709, Cr_HDR_709) based on the input chroma color components (Cb_LDR_709, Cr_LDR_709) and the saturation change function (F_S_L2H);

an inverse chromatic gamut mapper (410) arranged to map, keeping a range of lumas constant between input and output, the intermediate chroma color components (Cb_HDR_709, Cr_HDR_709) to secondary chroma color components (Cb_HDR_WG, Cr_HDR_WG) which have a higher saturation and are defined based on a second set of three primary colors (Pr_W, Pg_W, Pb_W) which have a higher saturation than the first set of three primary colors (Pr_N, Pg_N, Pb_N);

**characterized in that** the apparatus comprises a display tuning circuit (430) which comprises:

> an input for a luma mapping function (i_FT) which is received from a tuned luma mapping function derivation circuit (420), which is arranged to receive the metadata which further comprises a mastering display white point luminance (MDWPL), and receive from a storage location (421) a value of a display maximum luminance (ML_D), and apply an algorithm which determines a display-tuned luma mapping function (FL-DT) which is a similarly shaped version of the luma mapping function (F_L_L2H) which lies closer to a 45 degree diagonal (diag);
>
> wherein the display tuning circuit (430) comprises a luma mapper (431) arranged to calculate a tertiary luma (Y_MDR) of the tertiary image, and comprises a saturation multiplier calculation circuit (432) arranged to calculate a saturation multiplier (gsat) and comprises a multiplier (435) arranged to multiply both secondary chroma color components (Cb_HDR_WG, Cr_HDR_WG) by the saturation multiplier to obtain tertiary chroma color components (Cb_MDR_WG, Cr_MDR_WG) of the tertiary image;
>
> wherein the saturation multiplier calculation circuit (432) comprises a luma determination circuit (433) to determine a corresponding value of the input luma (Yin_LDR) corresponding to a value of the secondary luma (Yin_HDR) of a pixel being processed, and to determine the saturation multiplier (gsat) as a function of a first factor (SF1) which depends on the corresponding value of the input luma (Yin_LDR) and a second factor (SF2) which depends on the luma mapping applied to the secondary luma (Yin_HDR).

2. The apparatus as claimed in claim 1, wherein the saturation multiplier calculation circuit (432) is arranged to calculate as the first factor a reciprocal value (inv_gS) of a value of the output of the saturation change function (F_S_L2H) for an input being the corresponding value of the input luma (Yin_LDR).

3. The apparatus as claimed in claim 2, wherein the saturation multiplier calculation circuit (432) is arranged to yield as the first factor a display-tuned saturation multiplier (gS_DT) corresponding to the value of the display maximum luminance (ML_D) by applying an equation which raises the reciprocal value to a power C, where C is defined as 1 minus [invPQ(ML_D)-invPQ(ML_low)]/ [invPQ(MDWPL)-invPQ(ML_low)], wherein ML-low is a maximum luminance of the lower luminance dynamic range (DR_L), and invPQ is the inverse function of the SMPTE 2084 Perceptual Quantizer EOTF, for display tuning to lower dynamic range than the second luminance dynamic range (DR_H).

4. The apparatus as claimed in claim 2, wherein the saturation multiplier calculation circuit (432) is arranged to yield the display-tuned saturation multiplier (gS_DT) corresponding to the value of the display maximum luminance (ML_D) by applying an equation which yields the display-tuned saturation multiplier (gS_DT) equal to [invPQ(ML_D)-invPQ(ML_low)]/[ invPQ(MDWPL)-invPQ(ML_low)]+ inv_gS*[invPQ(MDWPL)-invPQ(ML_D)]/[ invPQ(MDWPL)-invPQ(ML_low)].

5. The apparatus as claimed in one of the above claims, wherein the saturation multiplier calculation circuit (432) is arranged to calculate the second factor as, for any value of the secondary luma (Yin_HDR), a ratio (gTM_YH) of an output of the luma mapper (431) for that value of the secondary luma (Yin_HDR) divided by that value of the secondary luma (Yin_HDR).

6. The apparatus as claimed in any of the above claims, wherein the function of the first factor (SF1) and the second factor (SF2) is a multiplication of the first factor (SF1) by the second factor (SF2).

7. A method of calculating a tertiary image (Im_MDR) having a tertiary luminance dynamic range (DR_T), comprising:

> receiving an image signal (S_inp), which comprises an input image (Im_inp) of a first, lower luminance dynamic range (DR_L), in which pixel colors are coded by an input luma (Yin_LDR) and two input chroma color components (Cb_LDR_709, Cr_LDR_709), which input chroma color components are defined based on a first set of three primary colors (Pr_N, Pg_N, Pb_N), and which image signal comprises metadata (MET) which comprises a luma mapping function (F_L_L2H) for mapping various values of various pixels having the input luma to corresponding values of a secondary luma (Yin_HDR), wherein the secondary luma is a luma of a secondary image (Im_Sec) which has a second, higher luminance dynamic range (DR_H), and which metadata comprises a saturation change function (F_S L2H) to change the two input chroma color components (Cb_LDR_709, Cr_LDR_709) into corresponding intermediate chroma color components (Cb_HDR_709, Cr_HDR_709) defined in a color system based on the same three primary colors (Pr_N, Pg_N, Pb_N);

calculating the secondary luma (Yin_HDR) by applying the luma mapping function (F_L_L2H) to the input luma (Yin_LDR), and determining the intermediate chroma color components (Cb_HDR_709, Cr_HDR_709) based on the input chroma color components (Cb_LDR_709, Cr_LDR_709) and the saturation change function (F_S_L2H);

inverse chromatic gamut mapping, keeping a range of lumas constant between input and output, the intermediate chroma color components (Cb_HDR_709, Cr_HDR_709) to secondary chroma color components (Cb_HDR_WG, Cr_HDR_WG) which have a higher saturation and are defined based on a second set of three primary colors (Pr_W, Pg_W, Pb_W) which have a higher saturation than the first set of three primary colors (Pr_N, Pg_N, Pb_N);

**characterized in that** the method comprises a display tuning sub-process which comprises:

receiving as input a luma mapping function (i_FT), which calculated on the basis of the received metadata which further comprises a mastering display white point luminance (MDWPL), and based on a received value of a display maximum luminance (ML_D), the calculating applying an algorithm which determines a display-tuned luma mapping function (FL-DT) which is a similarly shaped version of the luma mapping function (F_L_L2H) which lies closer to a 45 degree diagonal (diag);

wherein the display tuning sub-process comprises calculating a tertiary luma (Y_MDR) of the tertiary image by luma mapping the secondary luma (Yin_HDR) using the display-tuned luma mapping function (FL-DT), and comprises calculating a saturation multiplier (gsat) multiplying both secondary chroma color components (Cb_HDR_WG, Cr_HDR_WG) by the saturation multiplier to obtain tertiary chroma color components (Cb_MDR_WG, Cr_MDR_WG) of the tertiary image;

wherein the saturation multiplier calculation comprises determining a corresponding value of the input luma (Yin_LDR) corresponding to a value of the secondary luma (Yin_HDR) of a pixel being processed, and determining the saturation multiplier (gsat) as a function of a first factor (SF1) which depends on the corresponding value of the input luma (Yin_LDR) and a second factor (SF2) which depends on the luma mapping applied to the secondary luma (Yin_HDR).

8. The method as claimed in claim 7, wherein the saturation multiplier calculation is arranged to calculate as the first factor a reciprocal value (inv_gS) of a value of the output of the saturation change function (F_S L2H) for an input being the corresponding value of the input luma (Yin_LDR).

9. The method as claimed in claim 8, wherein the saturation multiplier calculation is arranged to yield as the first factor a display-tuned saturation multiplier (gS_DT) corresponding to the value of the display maximum luminance (ML_D) by applying an equation which raises the reciprocal value to a power C, where C is defined as 1 minus [invPQ(ML_D)-invPQ(ML_low)]/ [invPQ(MDWPL)-invPQ(ML_low)], wherein ML-low is a maximum luminance of the lower luminance dynamic range (DR_L), and invPQ is the inverse function of the SMPTE 2084 Perceptual Quantizer EOTF, for display tuning to lower dynamic range than the second luminance dynamic range (DR_H).

10. The method as claimed in claim 8, wherein the saturation multiplier calculation is arranged to yield the display-tuned saturation multiplier (gS_DT) corresponding to the value of the display maximum luminance (ML_D) by applying an equation which yields the display-tuned saturation multiplier (gS_DT) equal to [invPQ(ML_D)-invPQ(ML_low)]/[ invPQ(MDWPL)-invPQ(ML_low)]+ inv_gS*[invPQ(MDWPL)-invPQ(ML_D)]/[ invPQ(MDWPL)-invPQ(ML_low)].

11. The method as claimed in one of the above method claims, wherein the saturation multiplier calculation is arranged to calculate the second factor as, for any value of the secondary luma (Yin_HDR), a ratio (gTM_YH) of a display tuned luma which results from the luma mapping for that value of the secondary luma (Yin_HDR), divided by that value of the secondary luma (Yin_HDR).

12. The method as claimed in any of the above method claims, wherein the function of the first factor (SF1) and the second factor (SF2) is a multiplication of the first factor (SF1) by the second factor (SF2).

Fig. 1 A

Fig. 1B

Fig. 1D

Fig. 1C

Fig. 1

Fig. 2

Fig. 3

Fig. 4

EP 4 542 985 A1

Fig. 5

EP 4 542 985 A1

Fig. 6

EP 4 542 985 A1

gs_DT

F_S_H2M_100
F_S_H2M_200
F_S_ID

ML_D

| | |
|---|---|
| | 100 nit |
| | 200 nit |
| | 300 nit |
| | 400 nit |
| | 500 nit |
| | 600 nit |
| | 700 nit |
| | 800 nit |
| | 900 nit |
| | 1000 nit |

Yin_LDR

## Fig. 7

gs_DT

| | |
|---|---|
| | 100 nit |
| | 200 nit |
| | 300 nit |
| | 400 nit |
| | 500 nit |
| | 600 nit |
| | 700 nit |
| | 800 nit |
| | 900 nit |
| | 1000 nit |

Yin_LDR

## Fig. 8

sig_TOTLUT

Yin_HDR

gsat=TOTLUT[Yin_HDR]

432

⊗ 435

Fig. 9

EP 4 542 985 A1

Europäisches
Patentamt

European
Patent Office

Office européen
des brevets

# EUROPEAN SEARCH REPORT

**Application Number**

EP 23 20 4406

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | "High-Performance Single Layer High Dynamic Range (HDR) System for use in Consumer Electronics devices; Part 1: Directly Standard Dynamic Range (SDR) Compatible HDR System (SL-HDR1)", ETSI DRAFT SPECIFICATION; 103 433-1, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. JTC BROADCAS EBU/CENELEC/ETSI on Broadcasting, no. V1.2.2 17 June 2019 (2019-06-17), pages 1-125, XP014345447, Retrieved from the Internet: URL:docbox.etsi.org/Broadcast/Broadcast/70 -Drafts/00051-1/JTC-051-1v122.docx [retrieved on 2019-06-17] | 1,6,7,12 | INV. H04N9/77 |
| A | * Sections 7, D, and E; figures 3, E.2 * | 2-5,8-11 | |
| Y | EP 3 809 698 A1 (HUAWEI TECH CO LTD [CN]) 21 April 2021 (2021-04-21) | 1,6,7,12 | TECHNICAL FIELDS SEARCHED (IPC) |
| A | * paragraph [0176] - paragraph [0181]; figure 8 * | 2-5,8-11 | H04N |
| Y | DAI MIN (MAGGIE) ET AL: "An overview of end-to-end HDR", PROCEEDINGS OF SPIE; [PROCEEDINGS OF SPIE ISSN 0277-786X VOLUME 10524], SPIE, US, vol. 10752, 17 September 2018 (2018-09-17) , pages 107520Z-107520Z, XP060110666, DOI: 10.1117/12.2322600 ISBN: 978-1-5106-1533-5 | 1,6,7,12 | |
| A | * Section 4.4; figure 18 * | 2-5,8-11 | |

The present search report has been drawn up for all claims

| Place of search | Date of completion of the search | Examiner |
|---|---|---|
| Munich | 23 February 2024 | Bakstein, Hynek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

**EP 4 542 985 A1**

## ANNEX TO THE EUROPEAN SEARCH REPORT
## ON EUROPEAN PATENT APPLICATION NO.

EP 23 20 4406

This annex lists the patent family members relating to the patent documents cited in the above-mentioned European search report.
The members are as contained in the European Patent Office EDP file on
The European Patent Office is in no way liable for these particulars which are merely given for the purpose of information.

23-02-2024

| Patent document cited in search report | | Publication date | Patent family member(s) | | Publication date |
|---|---|---|---|---|---|
| EP 3809698 | A1 | 21-04-2021 | CN | 108933933 A | 04-12-2018 |
| | | | CN | 110691227 A | 14-01-2020 |
| | | | EP | 3809698 A1 | 21-04-2021 |
| | | | US | 2021120217 A1 | 22-04-2021 |
| | | | WO | 2020007166 A1 | 09-01-2020 |

EPO FORM P0459

For more details about this annex : see Official Journal of the European Patent Office, No. 12/82

28

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017157977 A

- WO 2017108906 A